# EUROPEAN PATENT APPLICATION

(11) **EP 0 915 335 A1**
(43) Date of publication of application: **12.05.1999**
(21) Application number: 97402387.1
(22) Date of filing: 10.10.1997
(51) Int. Cl.: G01N 30/48, B01J 20/32, C07B 57/00

(54) **A separating agent comprising an optically active polymer and polystyrene cristalline deposited on a carrier**

(71) Applicant: Aznar, Pascal, 78110 Le Vesinet (FR)
(72) Inventor: Aznar, Pascal, 78110 Le Vesinet (FR)

(57) **Abstract**

A separation agent comprising a derivative of cellulose or amylose containing small amount of polystyrene cristalline and which is deposided on an organic or inorganic carrier, preferibly silica, and which is stable to the treatment of most solvents, is described.

## Description

### Description of the invention

The present invention relates to a new kind of material which can be used for the chromatographic separation of optical isomers. This new material is made by reacting microcrystalline cellulose with an isocyanate, the formed carbamate is then deposited on an organic or inorganic matrix in the presence of small amounts of polystyrene cristalline.

The advantage of the aditon of polystyrene cristalline is that high enantioselectivity is retained and at the same time high chemical stability of the phase is obtained. The higher chemical stability allow the use of many solvents, for instance chlorinated solvents. This is great advantage because many racemates are difficult to dissolve at the concentrations required in preparative chromatography.

### Background of the invention

Optitally pure molecules have an increased interest in biological sciences, specially in the field of pharmaceuticals, pestizides and food additives. Optically pure molecules are present in nature or can be obtained by synthetic methods. Synthetic methods means assymetric synthesis where the desired compound is obtained in pure form directly or by synthesizing a racemate (a 50/50 mixture two enantiomers) and then separate the enantiomers in the mixture. Said separation of enantiomers can be archived by several methods, such as crystallization, enzymatic methods and chromatographic methods.

Chromatographic methods have the advantage that they can be used for analysis and/or preparation of large quantities of optically pure compounds. Chromatographic separation of enantiomers in a racemate can be archived by indirect methods in which the enantiomers are derivatized by means of an optically pure reagent and subsequentally chromatographed throw an achiral column, or by direct methods, in which the enantiomers in a racemate are separated by passing them throw a column containing a chiral stationary phase which can descriminate between underivatized enantiomers. In the present invention we descrive new chiral stationary phases for the direct chromatographic separation of enantiomers.

### Description of the manufacture of the separating agent

Said chiral stationary phases are made by deposing a carbamate of cellulose or amylose into the surface of a chemically modified porous or non porous organic or inorganic matrix. An inorganic matrix is preferred. Suitable examples of organic carrier can be founded among polystyrene, polyacrylamide and polyacrylate and as suitable inorganic carrier silica, alumina, titanium oxide, and glass.

The carrier can be used as sach, without modification, or surface modified.

The surface of the carrier may be treated to improve the affinity with polysaccharide carbamate derivative. As a surface treatment method can be mentioned a silane treatment using an organic silane, with for instance trimethyl chloro silane, TMS, or dimethyl chloro propylamino silane.

The surface modified carrier is illustrated in fig. 1 with silica as example.

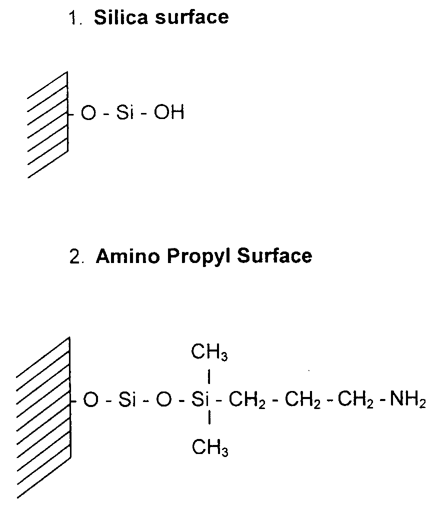

The chiral polymer coated on the surface of the carrier is manufactured from cellulose or amylose which is reacted an isocyanate to form a carbamate, as described in fig. 2.

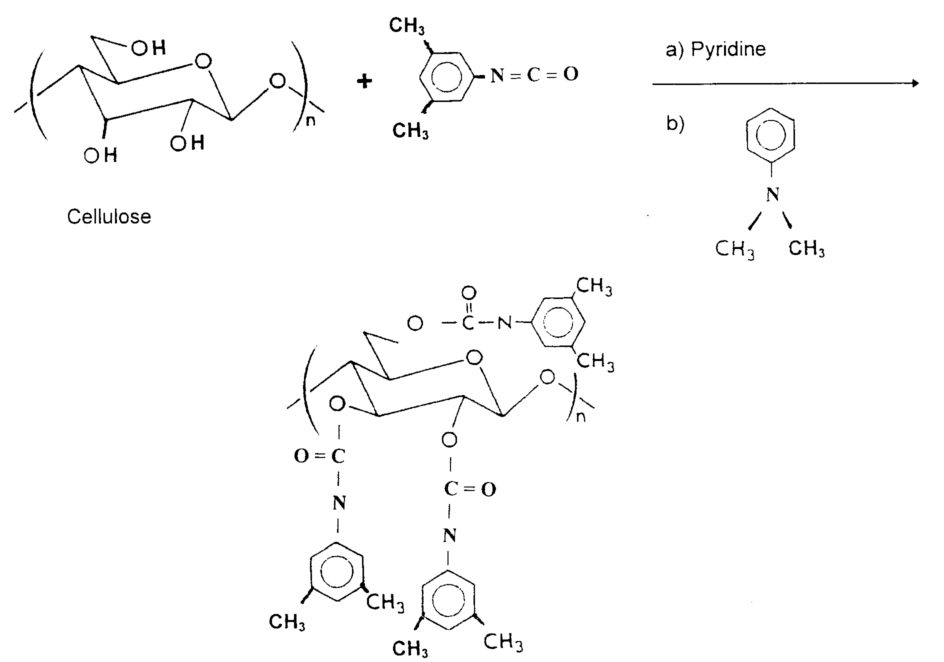

The chiral polymer then formed is afterward deposited on the surface of the carrier to form the final chromatographic material.

In the present invention the deposit on the carrier is accomplished by dissolving the chiral polymer in an appropriate solvent such as tetrahydrofurane, dichloromethane, methanol or isopropanol and adding to this mixture a small amount, 0.1-50% of polystyrene cristalline. Hexane is then added to the mixture which make the carbamate and polystyrene cristalline precipitate on the surface of the matrix.

The amount of optically active polymer which is adsorbed on the carrier surface is 5-50%.

The material is then ready to fill in a column.

### Exemple 1 - Synthesis of the carbamate of cellulose

5 g of cellulose are dispersed in 50 ml of fresh distilled pyridine. 2 g 4-dimethylaminopyridine are added and the suspension is boiled for 72 hours. After cooling the reaction mixture is poured in methanol and the formed precipitates is filtered off, washed with methanol and dried.

| Elemental analysis | C% | H% | N% |
|---|---|---|---|
| theoretical | 65.66 | 6.18 | 6.7 |
| experimental | 65.36 | 6.15 | 6.83 |

### Exemple 2 - Filling of a chromatographic column with the above synthetized material

Column dimension : 250 x 4,6 mm
silica matrix : Zorbax LP 10 µm

3.4 g of the chiral packing material of the invention are suspended in 10 ml of Hexane/IPA, stirred and sonicated during 5 min. The mixtured is poured in a reservoir for high pressure packing (80 ml) and filled up. The column is then packed at 650 bar pressure. The column is pushed with 100 ml of Hexane/IPA and equilibrated for 4 min.

### Exemple 3 - Resolution of a racemate

### Chromatographic conditions :

- Racemate : Transtylbène oxyde
- Eluant : Hexane/IPA 9/1 separation , α : 1,8
- Flow rate ; 0,5 ml/min
- Dimension : 4,6 x 250 mm
- UV detecteur : 254 nm

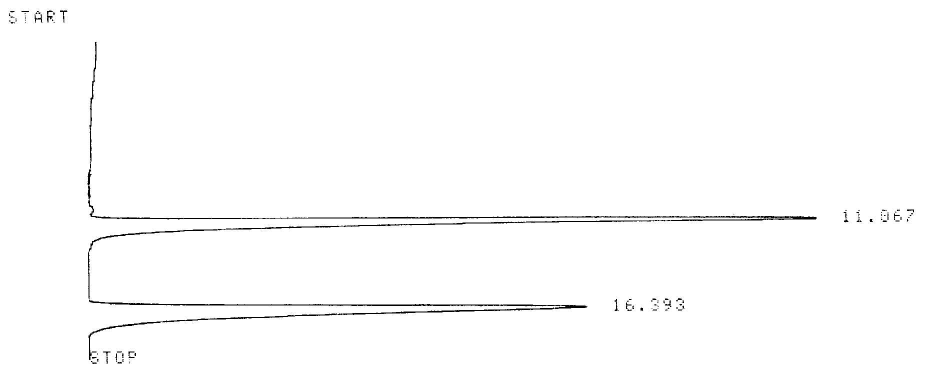

### Exemple 4 - Proof of the chemical stability of the material of the invention against different solvents

### Chromatographic conditions :

- Racemate : Transtylbène oxyde
- Eluant : Hexane/IPA 9/1 separation , α : 1,8
- Flow rate : 0,5 ml/min
- Dimension : 4,6 x 250 mm
- UV detecteur : 254 nm

### Flushing conditions

| | ***Flushing solvants*** | ***Flushing volumes*** |
|---|---|---|
| ***1*** | ***Ethyl acetate*** | ***500 volumes*** |
| ***2*** | ***Chloroform*** | ***500 volumes*** |
| ***3*** | ***Dichloromethane/THF 75/25*** | ***500 volumes*** |

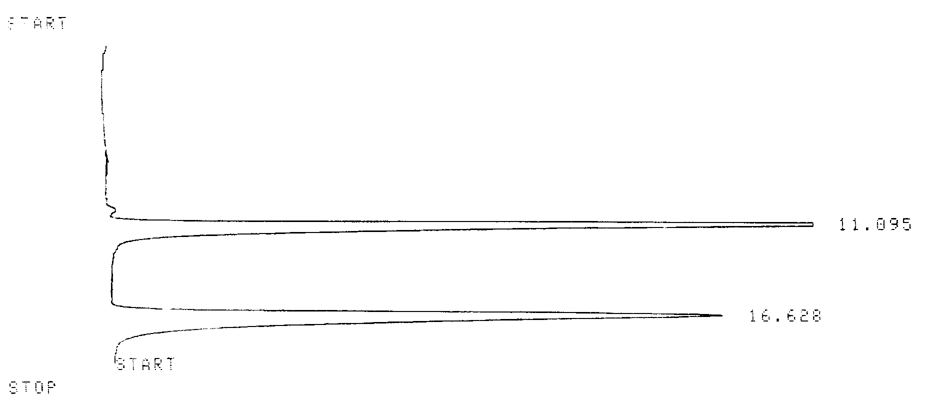

## Claims

1. A separation agent comprising an optically active polymer deposited together with a small amount of polystyrene cristalline or any polymers containing aromatics rings on an organic or inorganic carrier and which is stable to the treatment with most solvents.

2. A separation agent as in claim 1 in which the polymer is a derivative of cellulose or amylose.

3. A separation agent as in claim 2 in which the derivatives of cellulose or amylose are carbamates.

4. A separation agent as in claim 3 in which the carrier is silica.

5. The separation agent described in claims 1-4 is used for the chromatographic separation of optically active compounds.
